# EUROPEAN PATENT SPECIFICATION

(11) **EP 3 053 964 B1**
(45) Date of publication and mention of the grant of the patent: **30.08.2017**
(21) Application number: 16152226.3
(22) Date of filing: 21.01.2016
(51) Int. Cl.: C08L 67/02

(54) **SOFT GLYCOL-MODIFIED POLYETHYLENE TEREPHTHALATE (PETG) RESIN COMPOSITION AND EXTRUDED ARTICLE COMPRISING THE SAME**
WEICHE GLYCOLMODIFIZIERTE POLYETHYLEN-TEREPHTHALAT (PETG)-HARZZUSAMMENSETZUNG UND EXTRUDIERTER ARTIKEL DARAUS
COMPOSITION DE RÉSINE DE POLYÉTHYLÈNE TÉRÉPHTALATE MODIFIÉ PAR GLYCOL MOU (PETG) ET ARTICLE EXTRUDÉ COMPRENANT CELLE-CI

(30) Priority: 04.02.2015 KR 20150017157
(43) Date of publication of application: 10.08.2016
(73) Proprietor: Youngil Co. Ltd., Gwangju City 464-874 (KR)
(72) Inventor: LEE, Ho-Young, 472-725 Gyonggi-do (KR)
(74) Representative: Richardt Patentanwälte PartG mbB

(56) References cited:
- US-A1- 2014 162 042

## Description

### BACKGROUND OF THE INVENTION

### Field of the Invention

The present invention relates to a soft glycol-modified polyethylene terephthalate (PETG) resin composition and an extrusion molded article comprising the same, and more particularly, to a soft PETG resin composition, which comprises a PETG resin, a vegetable oil for reducing the hardness of the PETG resin, a TPEE (thermoplastic polyester elastomer) resin and MBS (methyl methacrylate butadiene styrene) resin for improving the physical properties of the PETG resin, and a processing aid for improving the physical properties and processability of the PETG resin, and which can be formed into an environmentally friendly film or sheet, and to an extruded article comprising the soft PETG resin composition.

### Description of the Prior Art

Generally, plastic films or sheets are made mainly of polyvinyl chloride (PVC) or olefinic resins such as polypropylene (PP) or polyethylene (PE). PVC has weather resistance, heat resistance, adhesive properties and excellent processability, but the use thereof has been limited due to toxic or environmental problems. For this reason, olefinic plastic resins such as PP or have been mainly used as a substitute for PVC. However, olefinic resins such as PP or PE have poor weather resistance, adhesive properties and processability compared to PVC, and thus have not yet completely substituted for PVC films or sheets. In particular, olefinic films or sheets have poor adhesive properties and post-processability, and thus are considerably difficult to bond by high frequency heating or an adhesive. For this reason, polyurethane resin has been used in place of a portion of polyolefinic resins. However, the polyurethane resin has poor water resistance and processability.

The background art related to the present invention includes Korean Patent No. 1004614, entitled "PETG-based molding decorative sheet having formability similar to that of PVC" (Patent Document 1). Patent Document 1 discloses a decorative sheet comprising a glycol-modified polyethylene terephthalate (PETG) alloy resin prepared by alloying a PETG resin with an elastomer resin, wherein the elastomer resin is an elastomer resin prepared by copolymerizing polyether glycol with a polybutylene terephthalate (PBT) resin.

The decorative sheet disclosed in Patent Document 1 has formability similar to that of PVC and is used mainly as a material for hard sheets, foam containers, etc. However, it is difficult to soften, and thus is difficult to prepare into soft US 2014/162042 A1 discloses the use of a polyester having the chemical structure of a TPEE as a plasticizer for PETG.

### SUMMARY OF THE INVENTION

Embodiments of the present invention are intended to provide a soft glycol-modified polyethylene terephthalate (PETG) which comprises a PETG resin, a vegetable oil for reducing the hardness of the PETG resin, a TPEE (thermoplastic polyester elastomer) resin and MBS (methyl methacrylate butadiene styrene) resin for improving the physical properties of the PETG resin, and a processing aid for improving the physical properties and processability of the PETG resin, and which can be formed into environmentally friendly films or sheets capable of substituting for existing soft PVC films or sheets, and also which can be formed into not only films or sheets, but also soft vinyl leather or tarpaulin, and thus can substitute for olefinic resins, such as PP or PE, and polyurethane resins, which have been difficult to process, due to their poor post-processability (high-frequency processability, printability, adhesive properties, etc.).

In an embodiment, the present invention provides a soft glycol-modified polyethylene terephthalate (PETG) resin composition comprising 100 parts by weight of a PETG resin, 25-60 parts by weight of a vegetable oil, and 25-120 parts by weight of a thermoplastic polyester elastomer (TPEE) resin.

In the present invention, the soft PETG resin composition may further comprise 5-15 parts by weight of a methyl methacrylate butadiene styrene (MBS) resin.

In the present invention, the soft PETG resin composition may further comprise a processing aid in an amount of 0.4-2.4 parts by weight based on 100 parts by weight of the soft PETG resin composition.

In the present invention, the processing aid may comprise a polytetrafluoroethylene (PTFE) resin.

The present invention also provides an extruded article formed by extruding the soft PETG resin composition through an extruder.

### DETAILED DESCRIPTION OF THE INVENTION

Hereinafter, the present invention will be described in further detail with reference to embodiments. It is to be understood, however, that these embodiments are for illustrative purposes only and are not intended to limit the scope of the present invention.

The present invention relates to a soft PETG resin composition, which comprises a PETG resin, a vegetable oil for reducing the hardness of the PETG resin, a TPEE (thermoplastic polyester elastomer) resin and MBS (methyl methacrylate butadiene styrene) resin for improving the physical properties of the PETG resin, and a processing aid for improving the physical properties and processability of the PETG resin, and which can be formed into an environmentally friendly film or sheet, and to an extruded article such as a soft film or sheet, which is formed by extruding the soft PET-G resin composition.

The present invention is intended to develop an environmentally friendly film or sheet having physical properties and processability, which are comparable to those of a soft PVC film or sheet. In the present invention, a glycol-modified polyethylene terephthalate (PETG) resin is used as a base resin.

The PETG resin is known as an environmentally friendly resin. It is relatively inexpensive and is used as a material for hard sheets, foam containers, etc. However, it is difficult to soften, and thus is difficult to prepare into soft films or soft sheets. According to the present invention, a thermoplastic polyester elastomer (TPEE) resin and a methyl methacrylate butadiene styrene (MBS) resin are added to the PETG resin to improve the physical properties of the PETG resin while maintaining the advantages (such as weather resistance and transparency) of the PETG resin. In addition, the MBS resin has good miscibility and compatibility with other resins, and the TPEE resin has good heat resistance and cold resistance. Thus, due to these resins, the resin composition of the present invention has excellent physical properties and post-processability.

The TPEE resin has good tensile strength at high temperature, as well as low compression set and good chemical resistance, cold resistance, weather resistance and processability. The TPEE resin that is used in the present invention preferably has the lowest possible melting point and hardness.

The methyl methacrylate butadiene styrene (MBS) resin is mainly used as an impact modifier for hard PVC or engineering plastic. The MBS resin that is mainly used as an impact modifier has good miscibility and compatibility with other resins, and thus is mainly used to improve the physical properties and processability of other resins.

The soft glycol-modified polyethylene terephthalate (PETG) resin composition according to the present invention comprises 100 parts by weight of a PETG resin, 25-60 parts by weight of vegetable oil, and 25-120 parts by weight of a thermoplastic polyester elastomer (TPEE) resin.

The PETG resin is known as an environmentally friendly resin. It is relatively inexpensive and is used as a material for hard sheets, foam containers, etc. However, it is difficult to soften, and thus is difficult to prepare into soft films or soft sheets. For this reason, according to the present invention, vegetable oil is used to soften the PETG resin.

The vegetable oil that is used in the present invention is preferably added in an amount of 25-60 parts by weight based on 100 parts by weight of the PETG resin. The vegetable oil that is used in the present invention is oil extracted from plants or plant seeds, and may be one or more selected from among palm oil, coconut oil, castor oil, grape seed oil, jojoba oil, safflower oil, macadamia nut, olive seed oil, etc. Particularly, the vegetable oil may be palm oil.

### Experimental Example 1

Soft PVC films or sheets are generally made of PVC resins having a plasticizer content of 40-60 parts by weight depending on the kind of plasticizer.

Thus, in Experimental Example 1, in order for PETG resin to have a hardness comparable to that of soft PVC films or sheets, the content of vegetable palm oil in PETG resin was increased stepwise to a level similar to the plasticizer content of soft PVC, as shown in Examples 1 to 7 in Table 1 below, and the hardness of the PETG resin having the vegetable oil added thereto was measured.

**Table 1**

| Components | Unit: gram | | | | | | |
|---|---|---|---|---|---|---|---|
| | Example 1 | Example 2 | Example 3 | Example 4 | Example 5 | Example 6 | Example 7 |
| PETG | 1000 | 1000 | 1000 | 1000 | 1000 | 1000 | 1000 |
| Palm oil | 200 | 250 | 300 | 400 | 500 | 600 | 700 |
| Hardness (A) | D hardness 66±3 | 98±3 | 94±3 | 87±3 | 82±3 | 76±3 | 68±3 |

The content of palm oil was increased stepwise to a level similar to the plasticizer content of soft PVC, and as a result, as shown in Table 1 above, it was found that the hardness of the PETF resin decreased with an increase in the palm oil content, but the change in hardness of the PETG resin by the increase in the palm oil was more severe than that of soft PVC.

Soft PVC films or sheets are generally made of soft PVC having a plasticizer (DOP) content of 40-60 parts by weight. As shown in Table 1 above, the hardness of Example 1 was higher than that of soft PVC 40 PHR (A hardness: 97±3). For this reason, the content of palm oil was increased to 25 PHR (parts per hundred) as shown in Example 2, and as a result, the hardness was similar to that of PVC 40 PHR. Meanwhile, in the case of Example 7, the PETG resin was difficult to mix, due to the excessively high content of palm oil. In addition, the PETG resin of Example 7 would be unsuitable for use as a material for soft films or sheets, even though it would be mixed, and it had high stickiness so that it could not be used as a product. In the case of Example 4, the migration of palm oil to the surface by the increase in the palm oil content appeared. PETG used in this Example was KN-100 (SK Chemicals Co., Ltd., Korea), and palm oil having a lower water content showed better physical properties.

Thus, it can be seen that the vegetable oil is effective in reducing the hardness of the PETG resin.

If the vegetable oil is added in an amount of less than 25 parts by weight, the hardness of the PETG resin will increase, and if the vegetable oil is added in an amount of more than 60 parts by weight, the stickiness of the PETG resin will increase. For these reasons, the vegetable oil is preferably added in an amount of 25-60 parts by weight based on 100 parts by weight of the PETG (glycol-modified polyethylene terephthalate) resin.

### Experimental Example 2

The PETG resin has excellent weather resistance and high tensile strength and is nontoxic and environmentally friendly. However, if palm oil is added to the PETG resin in order to soften the PETG resin, the physical properties of the PETG resin will be seriously deteriorated. Particularly, the heat resistance and cold resistance of the PETG resin will be deteriorated so that it will be sticky even at room temperature, and thus the PETG resin cannot be used as a commercialized even though it is formed into films or sheets. Furthermore, the cold resistance of the PETG resin is poor compared to that of soft PVC. In addition, as the amount of palm oil added increases, the physical properties of the PETG resin are reduced.

In order to overcome such problems, according to the present invention, a TPEE resin, which has good compatibility with the PETG resin and shows excellent heat resistance, cold resistance and weather resistance and also has some ability to absorb oil, was added as shown in Table 2 below to improve the weakened physical properties of the PETG resin.

**Table 2**

| Components | Unit: gram | | | | |
|---|---|---|---|---|---|
| | Example 1 | Example 2 | Example 3 | Example 4 | Example 5 |
| PETG | 1000 | 1000 | 1000 | 1000 | 1000 |
| Palm oil | 200 | 250 | 300 | 400 | 500 |
| TPEE | 12.5 (10%) | 25 (20%) | 420 (30%) | 750 (50%) | 1120 (70%) |
| State of mixture | Good | Good | Good | Good | Good |

| | | | | | |
|---|---|---|---|---|---|
| 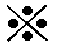 TPEE (thermoplastic polyester elastomer) is Item Number KP3340 manufactured by Kolon Plastics, Inc. | | | | | |

As shown in Table 2 above, the amount of TPEE resin added was increased stepwise from 10% to 70% of the sum of the amount of the PETG resin and the amount of palm oil, and as a result, the TPEE resin exhibited a good effect of improving the physical properties. In the case of Example 1 in which the TPEE resin was added to the mixture of the PETG resin and palm oil in an amount of 10% (12.5 PHR (parts per hundred)), the physical properties of the mixture were slightly improved, but the heat resistance of the mixture was insufficient. In the case of Example 2 in which the amount of TPEE resin added was increased to 20% (25PHR), the physical properties of the mixture were improved so that the mixture could be used as a product.

In order to compensate for the abrupt reduction in physical properties caused by an increase in the amount of palm oil added to reduce the hardness of the PETG oil, the amount of TPEE resin added was increased as shown in Examples 3, 4 and 5.

In the case of Examples 3 and 4, the mixtures showed good physical properties, and in the case of Example 5, the mixture had physical properties comparable to those of soft PVC 80 PHR, but oil migration appeared.

As a result, it could be seen that, when the TPEE resin, which has good compatibility with the PETG resin and shows excellent heat resistance, cold resistance and weather resistance and also has some ability to absorb oil, was added to the PETG resin, the physical properties of the PETG resin could be improved.

If the TPEE resin is added to the PETG resin in an amount of less than 25 parts by weight, the heat resistance of the mixture will be insufficient, and if the TPEE resin is added to the PETG resin in an amount of more than 120 parts by weight, oil blooming or migration will appear so that the mixture cannot be used as a product. For these reasons, the TPEE resin is preferably added in an amount of 25-120 parts by weight based on 100 parts by weight of the PETG resin.

### Experimental Example 3

As shown in Example 5 of Experimental Example 2, if palm oil is added in an amount of 60 PHR or more, oil migration occurs even when the TPEE resin is added in an amount of 100 PHR or more. In order to prevent this oil migration, in this Experimental Example, a methyl methacrylate butadiene styrene (MBS) resin was added as shown in Table 3 below.

**Table 3**

| Components | Unit: gram | | | |
|---|---|---|---|---|
| | Example 1 | Example 2 | Example 3 | Example 4 |
| PETG | 1000 | 1000 | 1000 | 1000 |
| Palm oil | 500 | 600 | 600 | 600 |
| TPEE | 750 (50%) | 750 (50%) | 1120 (70%) | 1120 (70%) |
| MBS | 50 | 100 | 100 | 150 |
| State of mixture | Good | Good | Good | Good |

| | | | | |
|---|---|---|---|---|
| 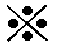 MBS (methyl methacrylate butadiene styrene) resin is Product No. MB872 or MB838 manufactured by LG Chemical Co., Ltd., Korea). | | | | |

As shown in Example 5 of Experimental Example 2, if palm oil is added in an amount of 60 PHR or more, oil migration occurs even when the TPEE resin is added in an amount of 100 PHR or more.

In order to prevent this oil migration, the MBS resin having a good ability to absorb oil was added as shown in Table 3 above. As a result, oil migration could be prevented. In Example 4 of Table 2, slight oil migration appeared. For this reason, the MBS resin was added in an amount of 5 PHR as shown in Example 1 of Table 3 above, and as a result, a clear effect of preventing oil migration appeared, but this effect was insufficient. Thus, the amount of MBS resin added was increased to 10 PHR, the effect of preventing oil migration further increased. In Example 4 of Table 3, the amount of MBS resin added was increased to 15 PHR in order to prevent oil migration.

As shown in Experimental Example 3, when the TPEE resin was added, the physical properties of the mixture could be improved while oil migration could be prevented, and slight oil migration could be effectively prevented by adding the MBS resin. However, as the amount of MBS resin added increased, the tensile strength and transparency of the mixture decreased.

If the MBS resin is added in an amount of less than 5 parts by weight, it will show little or no effect on improvement in the physical properties of the mixture, and if the MBS resin is added in an amount of 15 parts by weight, it will reduce the tensile strength and transparency of the mixture. For these reasons, the MBS resin is preferably added in an amount of 5-15 parts by weight based on 100 parts by weight of the PETG resin.

### Experimental Example 4

In Example 4, the processability of the composition of the present invention was tested in comparison with that of soft PVC 50 PHR. If the melt strength and viscosity of the composition are similar to those of soft PVC 50 PHR, it can be produced into a film or sheet comparable to one made of PVC 40 PHR or 60 PHR. Thus, the composition was extruded through a 30 mm extruder to form a 1.5 mm circular shape, and a comparative test was performed.

**Table 4**

| Components | Example | | | | | |
|---|---|---|---|---|---|---|
| | 1 | 2 | 3 | 4 | 5 | 6 |
| PETG | 1000 | 1000 | 1000 | 1000 | 1000 | 1000 |
| Palm oil | 250 | 300 | 400 | 500 | 600 | 600 |
| Processing aid (%) | 0.2 | 0.4 | 0.8 | 1.6 | 2.4 | 3.2 |
| Processability test (melt strength) | Lower | Similar | Similar | Slightly higher | Higher | Higher |
| Processability test (viscosity) | Lower | Lower | | Similar | | |
| State of mixture | Good | Good | Good | Good | Good | Good |

Important factors that determine the extrusion processability of soft plastic material are melt strength and viscosity. Generally, in injection molding, melt strength is not important, and processability decreases with an increase in viscosity.

In the extrusion molding of soft plastic material, melt strength is a very important factor. If the melt strength of a plastic material in a process of forming a film or a sheet by extrusion is low, the plastic material will be difficult to form into a film or sheet having a thin thickness, because the stretching ability of the plastic material is low. In the manufacture of a profile product, melt strength and viscosity should be high to ensure good processability.

As can be seen from the test results in Table 4 above, the melt strength and viscosity of the mixture of Example 1 were lower than those of PVC 50 PHR, and the melt strength and viscosity of the mixture of Example 2 were slightly lower than those of PVC 50 PHR, but the mixture of Example 2 could be formed into a thick sheet. The mixtures of Examples 4 and 5 had improved melt strength and viscosity so that they could be formed into profile products having a complex shape. In addition, the mixture of Example 6 contained an increased amount of a processing aid compared to that of Example 5, but the increase in the content of the processing aid did not lead to increases in melt strength and viscosity.

Thus, the processing aid is preferably added in an amount of 0.4-2.4 parts by weight based on 100 parts by weight of the PETG resin.

The processing aid that is used in the present invention may be selected from among various products. Particularly, the processing aid comprises a polytetrafluoroethylene (PTFE) resin. The PTFE resin has excellent processability, because it has excellent heat resistance and chemical resistance and high melt strength and viscosity.

The above-described soft PETG resin composition according to the present invention can be extruded through an extruder to form an extruded article such as a soft film or sheet.

As described above, the soft PETG resin composition according to the present invention comprises a PETG resin, a vegetable oil for reducing the hardness of the PETG resin, a TPEE (thermoplastic polyester elastomer) resin and MBS (methyl methacrylate butadiene styrene) resin for improving the physical properties of the PETG resin, and a processing aid for improving the physical properties and processability of the PETG resin. The soft PETG resin composition according to the present invention can be formed into environmentally friendly films or sheets which can substitute for existing soft PVC films or sheets. In addition, the resin composition of the present invention can be formed into not only films or sheets, but also soft vinyl leather or tarpaulin, and thus can substitute for olefinic resins, such as PP or PE, and polyurethane resins, which have been difficult to process, due to their poor post-processability (high-frequency processability, printability, adhesive properties, etc.). Thus, the soft PETG resin composition according to the present invention and an extruded article comprising the composition are highly useful.

## Claims

1. A soft glycol-modified polyethylene terephthalate (PETG) resin composition comprising:
100 parts by weight of a PETG resin;
25-60 parts by weight of a vegetable oil; and
25-120 parts by weight of a thermoplastic polyester elastomer (TPEE) resin.

2. The soft PETG resin composition of claim 1, further comprising 5-15 parts by weight of a methyl methacrylate butadiene styrene (MBS) resin.

3. The soft PETG resin composition of claim 1, further comprising a processing aid in an amount of 0.4-2.4 parts by weight based on 100 parts by weight of the soft PETG resin composition.

4. The soft PETG resin composition of claim 3, wherein the processing agent is based on a polytetrafluoroethylene (PTFE) resin.

5. An extruded article formed by extruding the soft PETG resin composition of any one of claims 1 to 4 through an extruder.

## Patentansprüche

1. Weiche glycolmodifizierte Polyethylen-Terephthalat- (PETG)-Harzzusammensetzung, umfassend:
100 Gewichtsteile eines PETG-Harzes;
25-60 Gewichtsteile eines Pflanzenöls; und
25-120 Gewichtsteile eines thermoplastischen Polyesterelastomer- (TPEE)-Harzes.

2. Weiche PETG-Harzzusammensetzung nach Anspruch 1, weiter umfassend 5-15 Gewichtsteile eines Methylmethacrylat-Butadien-Styrol- (MBS)-Harzes.

3. Weiche PETG-Harzzusammensetzung nach Anspruch 1, weiter umfassend ein Verarbeitungshilfsmittel in einer Menge von 0,4-2,4 Gewichtsanteilen, basierend auf 100 Gewichtsanteilen der weichen PETG-Harzzusammensetzung.

4. Weiche PETG-Harzzusammensetzung nach Anspruch 3, wobei das Verarbeitungsmittel auf einem Polytetrafluorethylen- (PTFE)-Harz basiert.

5. Extrudierter Artikel, der durch Extrudieren der weichen PETG-Harzzusammensetzung nach einem der Ansprüche 1 bis 4 durch einen Extruder gebildet wurde.

## Revendications

1. Composition de résine de polyéthylène téréphtalate modifié par glycol mou (PETG) comprenant :
100 parties en poids d'une résine PETG ;
25 à 60 parties en poids d'une huile végétale ; et
25 à 120 parties en poids d'une résine élastomère de polyester thermoplastique (TPEE).

2. Composition de résine PETG molle selon la revendication 1, comprenant en outre 5 à 15 parties en poids de résine de méthacrylate de méthyle-butadiène-styrène (MBS).

3. Composition de résine PETG molle selon la revendication 1, comprenant en outre une quantité de 0,4 à 2,4 parties en poids d'un adjuvant de fabrication sur la base de 100 parties par poids de la composition de résine PETG molle.

4. Composition de résine PETG molle selon la revendication 3, dans laquelle l'adjuvant de fabrication est basé sur une résine polytétrafluoroéthylène (PTFE).

5. Article extrudé formé grâce à l'extrusion d'une composition de résine PETG molle selon l'une quelconque des revendications 1 à 4 au moyen d'une extrudeuse.
